# EUROPÄISCHE PATENTSCHRIFT

(11) **EP 3 913 318 B1**
(45) Veröffentlichungstag und Bekanntmachung des Hinweises auf die Patenterteilung: **02.07.2025**
(21) Anmeldenummer: 21172636.9
(22) Anmeldetag: 07.05.2021
(51) Int. Cl.: F42B 12/22, F42B 12/24, B22F 5/10, B33Y 80/00

(54) **VORRICHTUNG EINES WEHRTECHNISCHEN EFFEKTORS**
DEVICE FOR A DEFENCE EFFECTOR
DISPOSITIF D'UN EFFECTEUR DE LA TECHNIQUE MILITAIRE

(30) Priorität: 18.05.2020 DE 102020113411
(43) Veröffentlichungstag der Anmeldung: 24.11.2021
(73) Patentinhaber: Rheinmetall Waffe Munition GmbH, 29345 Südheide (DE)
(72) Erfinder: KEIL, Stefan, 29664 Walsrode (DE); CEGIEL, Dirk, 22946 Trittau (DE); ALBRECHT, Rico, 29345 Unterlüß (DE); ZIMMERMANN, Christopher, 21029 Hamburg (DE)
(74) Vertreter: DREISS Patentanwälte PartG mbB

(56) Entgegenhaltungen:
- WO-A1-2015/166261
- WO-A1-2017/099847
- WO-A1-2017/168146
- DE-A1- 102015 014 821
- FR-A1- 3 000 191
- US-B1- 9 897 425

## Beschreibung

Die vorliegende Erfindung betrifft eine Vorrichtung eines wehrtechnischen Effektors, wobei dieser Effektor in seiner Wirkung verbessert werden soll. Wehrtechnische Effektoren sind in diesem Sinne wehrtechnische Bauteile, welche als HE-Gefechtsmunition (HE=High Explosive) gelten. Dazu zählen beispielsweise rohrwaffenverschießbare Munition, schulterverschießbare Munition, Raketen oder Granaten.

Im einfachsten Fall bestehen solche Effektoren aus einer einen Sprengstoff umgebenden Hülle. Ziel einer HE-Gefechtsmunition ist es, eine Splitterwirkung herbeizuführen. Derart erzeugte Splitter variieren hinsichtlich Masse und Geometrie jedoch stark, woraus ein schwankender Wirkradius der Munition resultiert.

Zur Verbesserung eines solchen wehrtechnischen Effektors soll nun die Splitterwirkung verstärkt und/oder ergänzt werden. Dazu könnte beispielsweise vorgesehen sein, dass die Splitterwirkung verstärkt wird, dass die Wirkung verlängert wird, dass höhere Temperaturen erzeugt werden können, dass Treffer markiert werden können, dass eine Brandentzündung realisiert werden kann und/oder dass die Wirkung skalierbar eingestellt werden kann. Außerdem kann vorgesehen sein, dass ein Abbrand von Sprengladungen, zum Beispiel bei Blindgängern realisiert wird.

Dazu sind Wirkmittel bekannt, beispielsweise aus der DE 10 2015 014 821 A1, welche pyrotechnische Wirkmittel in Form von Verzögerungs- und Anzündsätzen offenbart, die skalierbar sind und somit gemäß Anforderungen einstellbar gestaltet sind.

Zur Erzeugung hinsichtlich Masse und Geometrie gleichmäßiger Splitter kann man die Geschosshülle bspw. durch Einkerbungen vorfragmentieren oder zwischen Geschosshülle und Sprengstoff eine Einlage mit bspw. in Kunststoff eingebetteten definierten Splittern vorsehen. Eine wirkungsvolle Vorfragmentierung der Geschosshülle bedingt aber eine Schwächung derselben, was bei hohen Abschussbelastungen ein Problem darstellt. Eine solche Einlage wird bspw. in der DE 10 2007 001 998 A1 offenbart.

Solche Probleme der Splittereinlagen lassen sich umgehen, indem man zwischen Geschosshülle und Sprengstoffladung einen dünnwandigen Liner mit einem vorgeprägten Muster platziert, wobei die dabei gebildeten Hohlräume mindestens Richtung Geschosshülle weisen. Bei Zündung der Sprengladung wirkt diese in Verbindung mit dem Liner wie eine multiple Schneidladung, sodass aus der Geschosshülle Splitter definierter Masse und Geometrie erzeugt werden .

Gemäß US 9,897,425 B1 wird zur Unterstützung der Fragmentierung der Geschosshülle vorgeschlagen, eine Innenseite der Geschosshülle mit einer diagonal verlaufenden Stegstruktur und dadurch gebildeten Zwischenräumen zu versehen, wobei die Stegstruktur metallische Partikel aus Wolfram, Kupfer, Nickel, Stahl, oder anderen Metallen umfasst, die in einer flüssig aufbringbaren Matrix aufgenommen sind. Hierdurch soll bei Explosion der Wirkmasse des Geschosses eine Fragmentierung der Geschosshülle entsprechend der Stegstruktur erzielt oder unterstützt werden.

WO 2017/099847 A1 offenbart einen zylindrischen Liner mit einer Vielzahl von nach radial außen gerichteten Zellen, wobei die Zellen die Fragmentierung des Liners rein mechanisch bewirken.

Die vorliegende Erfindung hat dementsprechend die Aufgabe, bekannte wehrtechnische Effektoren derart zu verbessern, dass die vorgenannten Wirkungsverstärkungen und/oder - ergänzungen realisiert werden können ohne die Probleme des Stands der Technik hervorzurufen.

Diese Aufgabe wird durch die Merkmale des Hauptanspruchs gelöst sowie durch das Verfahren nach Anspruch 8.

Dazu weist die Vorrichtung eines wehrtechnischen Effektors ein inertes Element auf, welches für die Funktion des Effektors ohne die erfindungsgemäßen Verbesserungen keinen Beitrag liefert. Beispielsweise kann das inerte Element das Gehäuse des Effektors sein. Auch Halterungen, Verstrebungen, Verbindungselemente oder andere konstruktive Bauteile des Effektors können erfindungsgemäß als inertes Element dienen. Ebenso können die bekannten Liner aus dem Stand der Technik als inertes Element gelten.

Dazu weist das inerte Element mindestens zwei Seiten auf, beispielsweise eine Innen- und eine Außenseite eines Gehäuses. Weiterhin weist die erfindungsgemäße Vorrichtung ein Wirkmittel auf, welches den pyrotechnischen Effekt erzeugt. Als Wirkmittel kann ein Sprengstoff vorgesehen sein, aber auch Effektladungen können als Wirkmittel dienen.

Erfindungsgemäß weist nun das inerte Element auf mindestens einer Seite eine zumindest teilweise poröse Struktur auf. Die Struktur kann dabei aus verschiedenen geometrischen Formen bestehen.
weiter erfindungsgemäß wird vorgeschlagen, dass die Struktur aus einem Reduktionsmittel besteht und das Reduktionsmittel aus Aluminium, Titan, einer Aluminiumlegierung oder einer Titanlegierung besteht.

Die Struktur selbst steht weiter erfindungsgemäß mit einem Oxidationsmittel in Wirkverbindung, so dass eine zusätzliche Wirkung durch die Struktur und das Oxidationsmittel hervorgerufen werden kann. Dabei ist vorgesehen, dass die Struktur durch Detonation oder Aufprall des Effektors zerstäubt wird und mit einem Oxidationsmittel reagieren kann, um zusätzliche Energie freizugeben. Diese zusätzliche Energie wird in Addition zur Energieerzeugung des pyrotechnischen Wirkmittels verstanden. Denkbare wäre auch eine Fragmentierung des inerten Elementes, um durch die Detonation einzelne Fragmente zu generieren. Diese könnten die Wirkung über eine größerer Entfernung verteilen. Auch könnte das inerte Element aus gestapelten Fragmenten bestehen.

In einer besonderen Ausführungsform wird die Struktur mittels eines Druckverfahrens, insbesondere eines Laserdruckverfahrens auf das inerte Element aufgebracht. Es ist auch möglich, die Struktur aufzukleben oder in das inerte Element zu ätzen. Das inerte Element kann auch vollständig aus dieser Struktur bestehen. Als Ausgangsmaterial können jedoch auch offenporige Metallschäume verwendet werden.

Als weitere besondere Ausführungsform kann das inerte Element auch als Liner vorgesehen sein, welcher zumindest bereichsweise zwischen einer Hülle und dem Wirkmittel angeordnet ist. Der Liner ist dabei zumindest bereichsweise porös gestaltet. Durch die zumindest bereichsweise poröse Auslegung des Liners wird im einfachsten Fall die reaktive Oberfläche zum Sprengstoff bzw. zur Wirkladung vergrößert.

Die Vorsehung einer Struktur zur Wirkungsverstärkung ist beispielsweise aus der EP 0 659 480 Al bekannt. Diese Druckschrift befasst sich mit Katalysatoren und der Wirkungsverstärkung durch eine strukturierte Oberfläche.

Damit ist der Kern der vorliegenden Erfindung die Auslegung der normalerweise inerten Bauteile eines wehrtechnischen Effektors als pyrotechnische Baugruppe. Als Oxidationsmittel sind dabei Nitrate oder Perchlorate von Alkali- oder Erdalkalimetallen vorgesehen, aber auch Metalloxide wie beispielsweise Eisenoxide oder polyfluorierte organische Verbindungen sind denkbar.

Das Oxidationsmittel selbst steht in Wirkverbindung mit der Struktur. Dabei kann die Struktur, wie bereits vorgenannt, bevorzugt durch ein Druckverfahren auf das inerte Element aufgebracht werden.

Das Oxidationsmittel kann derart in die Vorrichtung aufgenommen werden, dass bei Detonation oder Aufprall des Effektors, dieses in Wirkverbindung mit der Struktur treten kann. Besonders bevorzugt wird das Oxidationsmittel in die Zwischenräume der Struktur eingebracht. Die Stege der Struktur, welche die Zwischenräume bilden, stehen dabei direkt in
Kontakt mit dem Oxidationsmittel. Aufgrund einer rauen Oberfläche, beispielsweise durch das Druckverfahren, hat das Oxidationsmittel einen guten Halt in den Zwischenräumen.

Aber auch ein chemisches oder physikalisches Abscheiden des Oxidationsmittels auf die Struktur ist denkbar. Ebenso wird vorgeschlagen, das Oxidationsmittel durch Druckfiltration von Oxidationsmittelsuspensionen in die Struktur einzubringen. Das Oxidationsmittel kann dabei in Form von binderhaltigen Pasten vorliegen oder auf die Struktur chemisch abgeschieden werden.

Um eine Verstärkung der Wirkmitteleffekte zu gewährleisten wird weiterhin vorgeschlagen in einer besonderen Ausführungsform das Wirkmittel zumindest teilweise in Kontakt mit dem Oxidationsmittel und/oder der Struktur treten zu lassen. Dies kann durch einen direkten Kontakt oder durch abgetrennte Kammern im wehrtechnischen Effektor geschehen.

Um die Verbindung zur Struktur zu verstärken und die Porosität zu unterstützen, wird vorgeschlagen, dass das Oxidationsmittel ein Bindemittel enthält. Dadurch kann das Oxidationsmittel einfacher der Struktur zugeordnet werden.

In einer weiteren besonderen Ausführungsform wird vorgeschlagen, dass das inerte Element bereichsweise mit einer erfindungsgemäßen Struktur versehen wird, damit entstehen an dem inerten Element Bereiche welche diese Strukturen umfassen. Diese Bereiche können auf mindestens einer Seite des inerten Elements angeordnet werden, aber auch eine beidseitige Anordnung ist denkbar.

Zur Herstellung der erfindungsgemäßen Vorrichtung wird vorgeschlagen, dass zunächst eine Struktur zumindest teilweise auf mindestens einer Seite des inerten Elements aufgebracht wird, bevorzugter Weise durch ein entsprechendes Druckverfahren. Dabei kann die Struktur zunächst aus einem porösen Material aufgebracht werden und das Oxidationsmittel mit der Struktur in Wirkverbindung gebracht werden.

Wird nun die erfindungsgemäße Vorrichtung durch Detonation des Wirkmittels oder Aufprall des Effektors auf ein Ziel mit Energie beaufschlagt, wird durch die Porosität der Struktur diese zerstäubt oder zumindest zerlegt, wodurch das Reduktionsmittel mit dem Oxidationsmittel reagiert und zusätzliche Energie erzeugt.

Die erfindungsgemäße Vorrichtung ist dadurch in vielen Anwendungen verwendbar, insbesondere wird jedoch eine Verwendung in einem Geschoss oder einer Munition vorgeschlagen, wobei das inerte Element das Gehäuse und/ oder Strukturbauteile des Geschosses oder der Munition darstellen.

Die erfindungsgemäße Vorrichtung kann dabei belastungsgerecht optimiert werden, wodurch das Gewicht gesenkt und gegebenenfalls notwendige Dämpfungseigenschaften eingestellt werden können. Die hierdurch entstehende Geometrie sowie der Aufbau des Materials der Struktur können insbesondere in 3-D Druckverfahren hergestellt werden.

Die Strukturen bestehen dann aus zusammengefügten metallischen Partikeln und können das Reduktionsmittel der Vorrichtung darstellen. Durch Variation der Druck- oder Schweißparameter kann der Zusammenhalt der einzelnen Partikel und damit die Zerstäubungsfähigkeit bzw. Porosität verändert werden. Die Anordnung des Oxidationsmittels an oder in den Zwischenräumen der Struktur wird dabei durch eine raue Oberfläche und/ oder Hohlräume begünstigt, die beispielsweise beim Drucken der Strukturen entsteht.

Weitere Merkmale ergeben sich aus den beigefügten Zeichnungen. Es zeigen:
Figur 1: eine erfindungsgemäße Vorrichtung in einem Geschoss;
Figur 2: ein Bereich einer erfindungsgemäßen Struktur auf einem inerten Element;
Figur 3: ein mit einer inneren und äußeren Struktur versehenes inertes Element

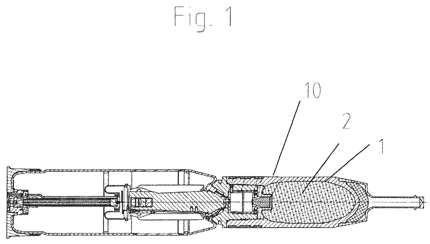

Figur 1 zeigt eine mögliche Verwendung der erfindungsgemäßen Vorrichtung. Es wird ein Geschoss 10 als Teil einer Munition gezeigt. Das Geschoss 10 bzw. die Munition ist deshalb als wehrtechnischer Effektor anzusehen. Das Geschoss 10 beinhaltet eine Kammer für ein Wirkmittel 2, welches durch Abbrand oder Zerlegung zur Effektausbringung gebracht werden kann.

Die Kammer ist von einem Gehäuse umgeben, welches Teilweise das inerte Element 1 darstellt. Damit ist in der Figur 1 ein inertes Element gezeigt, welches die das Wirkmittel umgebende Kammer beinhaltet.

Das inerte Element 1 wird als inert bezeichnet, weil es im Sinne des Stands der Technik keine Funktion des Effektors erfüllt. Es dient nicht zur Ausbringung des Effektes, sondern dient lediglich als konstruktives Mittel des Effektors.

Im Sinne der vorliegenden Anmeldung soll diesem bisher inerten Element nun eine Wirkung hinzugefügt werden. Als Wirkung wird diesbezüglich eine Energieerzeugung verstanden.

Diese kann auch als Energieumwandlung gespeicherter chemischer Energie zur Wirkung des Effektors beitragen.

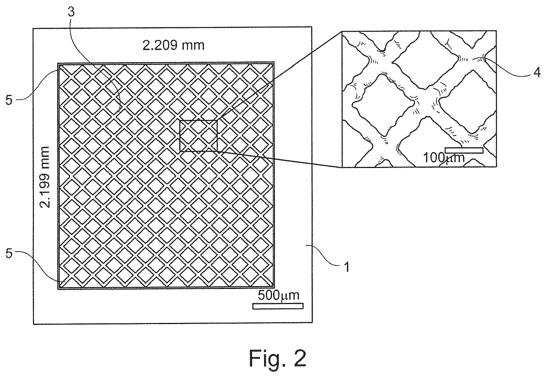

Dazu wird gemäß Figur 2 dem inerten Element zumindest bereichsweise eine poröse Struktur 3 zugeordnet. Die Struktur ist als porös zu bezeichnen, da bei einem Aufprall oder einer Detonation des Effektors die Struktur zerstäubt oder zumindest zerlegt wird.

Die Struktur 3 wird bevorzugter Weise durch ein additives Fertigungsverfahren, bspw. durch ein Druckverfahren auf das inerte Element 1 aufgebracht. Im Falle der Kammer aus Figur 1 weist das inerte Element 1 dazu mindestens zwei Seiten auf, nämlich eine Außen- und eine Innenseite. Die Struktur 1 wird nun in Bereichen 5 der Innenseite des inerten Elements gezeigt.

In der Vergrößerung der Figur 2 ist zu erkennen, dass die Struktur 3 aus Stegen 4 besteht, welche Zwischenräume zwischen den Stegen 4 bilden. In diese Zwischenräume wird bevorzugter Weise ein Oxidationsmittel aufgenommen.

Der Struktur 3 bzw. den Stegen 4 der Struktur wird weiterhin bevorzugter Weise ein Reduktionsmittel zugeordnet. Dies kann durch Anordnung geschehen, nämlich in der Form, dass das Reduktionsmittel in Kontakt mit der Struktur 3 steht. Bevorzugter Weise bestehen die Stege 4 der Struktur 3 bereits aus dem Reduktionsmittel oder beinhalten zumindest das Reduktionsmittel.

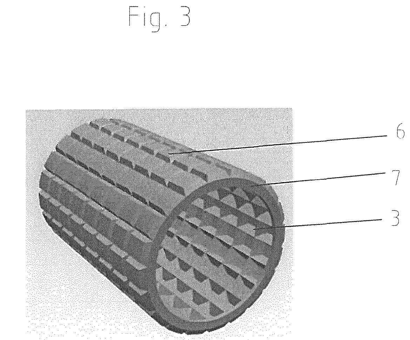

Figur 3 zeigt dazu ein Gehäuse 7, welches als inertes Element 1 fungiert. Dieses Mal wurde die Struktur 3 in die Innenseite des Gehäuses angebracht und zwar derart, dass sich auf der Außenseite des inerten Elements 1 ebenfalls eine Struktur, nämlich eine Außenstruktur 6 bildet.

Wieder wird bevorzugt der Struktur 3 ein Reduktionsmittel zugeordnet oder die Struktur beinhaltet das Reduktionsmittel. Die Struktur 3 steht erfindungsgemäß in Kontakt mit dem Oxidationsmittel.

Bei Detonation oder Aufprall und damit einhergehender Deformation des Effektors reagieren Reduktionsmittel und Oxidationsmittel miteinander, so dass zur Energie des Wirkmittels zusätzliche Energie freigegeben wird. Diese unterstützt und optimiert die Wirkung des Effektors.

Die vorliegende Anmeldung ist nicht auf die bevorstehenden Merkmale beschränkt. Vielmehr sind weitere Ausgestaltungen möglich.

So wäre eine Integration von Anzündmitteln, wie beispielsweise Schwarzpulver, in die Vorrichtung denkbar. Ebenso ist es denkbar mehrere Bereiche der Struktur vorzusehen oder die Bereiche auf mehreren Seiten des inerten Elements vorzusehen. Zuletzt wäre auch eine Struktur aus porösem Material wie beispielsweise Keramik denkbar, welcher das Reduktionmittel zugeordnet wird.

### BEZUGSZEICHENLISTE

- 1: inertes Element
- 2: Wirkmittel
- 3: Poröse Struktur
- 4: Steg
- 5: Bereich
- 6: Außenstruktur
- 7: Gehäuse

- 10: Geschoss

## Patentansprüche

1. Vorrichtung eines wehrtechnischen Effektors, mit einem Gehäuse und
mit einem das Gehäuse oder einen Liner des Effektors bildenden inerten Element (1) mit mindestens zwei Seiten,
mit einem in dem Gehäuse aufgenommenen Wirkmittel (2), welches einen pyrotechnischen Effekt erzeugt, in Form eines Sprengstoffs oder einer Effektladung, wobeidas inerte Element (1) auf mindestens einer Seite eine zumindest teilweise poröse Struktur (3, 6) aufweist und
wobei die Struktur (3, 6) Stege (4) und Zwischenräume zwischen den Stegen (4) aufweist
**dadurch gekennzeichnet, dass** die Struktur (3, 6) aus einem Reduktionsmittel besteht und
dass das Reduktionsmittel der Struktur (3, 6) aus Aluminium, Titan, einer Aluminiumlegierung oder einer Titanlegierung besteht,
und dass die Struktur (3, 6) mit einem Oxidationsmittel in Wirkverbindung steht und dass das Oxidationsmittel hierfür zumindest teilweise in den Zwischenräumen aufgenommen ist.

2. Vorrichtung nach Anspruch 1, **dadurch gekennzeichnet, dass** das Oxidationsmittel aus Metalloxid besteht.

3. Vorrichtung nach Anspruch 1 oder 2, **dadurch gekennzeichnet, dass** das inerte Element (1) als Liner ausgeführt ist.

4. Vorrichtung nach einem der Ansprüche 1 bis 3, **dadurch gekennzeichnet, dass** die Struktur (3, 6) mittels eines additiven Fertigungsverfahrens, nämlich eines Laserdruckverfahrens, auf das inerte Element (1) aufgebracht ist.

5. Vorrichtung nach einem der Ansprüche 1 bis 4, **dadurch gekennzeichnet, dass** das Oxidationsmittel chemisch auf die Struktur abgeschieden ist.

6. Vorrichtung nach einem der Ansprüche 1 bis 5, **dadurch gekennzeichnet, dass** das Oxidationsmittel durch Druckfiltration von Oxidationsmittelsuspensionen in die Struktur eingebracht ist.

7. Vorrichtung nach Anspruch 6, **dadurch gekennzeichnet, dass** das Oxidationsmittel ein Bindemittel enthält.

8. Verfahren zur Herstellung einer Vorrichtung nach einem der Ansprüche 1 bis 7, **dadurch gekennzeichnet, dass** zunächst eine Struktur (3, 6) zumindest teilweise auf mindestens einer Seite des inerten Elements (1) aufgebracht wird, wobei die Struktur (3, 6) Stege und Zwischenräume zwischen den Stegen aufweist, und dass ein Oxidationsmittel mit der Struktur (3, 6) in Wirkverbindung gebracht wird, indem das Oxidationsmittel hierfür zumindest teilweise in die Zwischenräume eingebracht wird.

9. Verfahren nach Anspruch 8, **dadurch gekennzeichnet, dass** die inerte Struktur durch ein additives Fertigungsverfahren, nämlich ein Laserdruckverfahren auf das inerte Elemente (1) aufgebracht wird und/oder das Oxidationsmittel durch chemisches Abscheiden auf die Struktur aufgebracht wird oder durch Druckfiltration in die Struktur eingebracht wird.

10. Verfahren nach Anspruch 8 oder 9, **dadurch gekennzeichnet, dass** die Wirkverbindung von Oxidationsmittel und Liner hergestellt wird und dadurch die Reaktivität des Liners gesteigert wird.

11. Verfahren nach einem der Ansprüche 8, 9 oder 10, **dadurch gekennzeichnet, dass** das Oxidationsmittel in Form von binderhaltigen Pasten eingebracht wird oder durch physikalisches oder chemisches Abscheiden auf die Struktur des Liners.

12. Verwendung einer Vorrichtung nach einem der Ansprüche 1 bis 7 bei einem Gehäuse als inertes Element (1) eines Geschosses (10) oder einer Munition.

## Claims

1. Device for a defense effector, comprising a housing and
an inert element (1) forming the housing or forming a liner of the effector, the inert element comprising at least two faces,
the device comprising an active agent (2) accommodated in the housing, which produces a pyrotechnic effect, in the form of an explosive or an effect charge, the inert element (1) having an at least partially porous structure (3, 6) on at least one face and
the structure (3, 6) having webs (4) and gaps between the webs (4),
**characterized in that** the structure (3, 6) consists of a reducing agent and
**in that** the reducing agent of the structure (3, 6) consists of aluminum, titanium, an aluminum alloy or a titanium alloy,
and **in that** the structure (3, 6) is in operative connection with an oxidizing agent and **in that** the oxidizing agent is at least partially accommodated in the gaps.

2. Device according to claim 1, **characterized in that** the oxidizing agent consists of metal oxide.

3. Device according to claim 1 or 2, **characterized in that** the inert element (1) is designed as a liner.

4. Device according to any of claims 1 to 3, **characterized in that** the structure (3, 6) is applied to the inert element (1) by means of an additive manufacturing process, specifically a laser printing process.

5. Device according to any of claims 1 to 4, **characterized in that** the oxidizing agent is chemically deposited on the structure.

6. Device according to any of claims 1 to 5, **characterized in that** the oxidizing agent is introduced into the structure by pressure filtration of oxidizing agent suspensions.

7. Device according to claim 6, **characterized in that** the oxidizing agent contains a binding agent.

8. Method for producing a device according to any of claims 1 to 7,
**characterized in that,** firstly, a structure (3, 6) is at least partially applied to at least one face of the inert element (1), the structure (3, 6) having webs and gaps between the webs, and **in that** an oxidizing agent is brought into operative connection with the structure (3, 6) by introducing the oxidizing agent at least partially into the gaps for this purpose.

9. Method according to claim 8, **characterized in that** the inert structure is applied to the inert element (1) by an additive manufacturing process, specifically a laser printing process, and/or the oxidizing agent is applied to the structure by chemical deposition or is introduced into the structure by pressure filtration.

10. Method according to claim 8 or 9, **characterized in that** the operative connection between the oxidizing agent and the liner is established, thereby increasing the reactivity of the liner.

11. Method according to any of claims 8, 9 or 10, **characterized in that** the oxidizing agent is introduced in the form of binder-containing pastes or by physical or chemical deposition onto the structure of the liner.

12. Use of a device according to any of claims 1 to 7 in a housing as an inert element (1) of a projectile (10) or ammunition.

## Revendications

1. Dispositif d'un effecteur militaire, avec un boîtier et avec un élément inerte (1) formant le boîtier ou un liner de l'effecteur et avec au moins deux côtés,
avec un moyen actif (2) logé dans le boîtier, lequel produit un effet pyrotechnique, sous la forme d'un explosif ou d'une charge à effet, dans lequel l'élément inerte (1) présente sur au moins un côté une structure (3, 6) au moins partiellement poreuse et
dans lequel la structure (3, 6) présente des nervures (4) et des espaces intermédiaires entre les nervures (4)
**caractérisé en ce que** la structure (3, 6) est constituée d'un agent réducteur, et
que l'agent réducteur de la structure (3, 6) est constitué d'aluminium, de titane, d'un alliage d'aluminium ou d'un alliage de titane,
et que la structure (3, 6) est en liaison active avec un oxydant et que l'oxydant est à cet effet au moins partiellement logé dans les espaces intermédiaires.

2. Dispositif selon la revendication 1, **caractérisé en ce que** l'oxydant est constitué d'oxyde métallique.

3. Dispositif selon la revendication 1 ou 2, **caractérisé en ce que** l'élément inerte (1) est conçu comme un liner.

4. Dispositif selon l'une quelconque des revendications 1 à 3, **caractérisé en ce que** la
structure (3, 6) est appliquée sur l'élément inerte (1) au moyen d'un procédé de fabrication additive, à savoir un procédé d'impression au laser.

5. Dispositif selon l'une quelconque des revendications 1 à 4, **caractérisé en ce que** l'oxydant est déposé chimiquement sur la structure.

6. Dispositif selon l'une quelconque des revendications 1 à 5, **caractérisé en ce que** l'oxydant est introduit dans la structure par filtration sous pression de suspensions d'oxydant.

7. Dispositif selon la revendication 6, **caractérisé en ce que** l'oxydant contient un liant.

8. Procédé de fabrication d'un dispositif selon l'une quelconque des revendications 1 à 7, **caractérisé en ce qu'**une structure (3, 6) est d'abord appliquée au moins partiellement sur au moins un côté de l'élément inerte (1), dans lequel la structure (3, 6) présente des nervures et des espaces intermédiaires entre les nervures, et qu'un oxydant est amené en liaison fonctionnelle avec la structure (3, 6), du fait que l'oxydant est introduit à cet effet au moins partiellement dans les espaces intermédiaires.

9. Procédé selon la revendication 8, **caractérisé en ce que** la structure inerte est appliquée sur l'élément inerte (1) par un procédé de fabrication additive, à savoir un procédé d'impression au laser et/ou l'oxydant est appliqué sur la structure par dépôt chimique ou est introduit dans la structure par filtration sous pression.

10. Procédé selon la revendication 8 ou 9, **caractérisé en ce que** la liaison fonctionnelle de l'oxydant et du liner est obtenue et que la réactivité du liner est ainsi augmentée.

11. Procédé selon l'une quelconque des revendications 8, 9 ou 10, **caractérisé en ce que** l'oxydant est introduit sous forme de pâtes contenant un liant ou sur la structure du liner par dépôt physique ou chimique.

12. Utilisation d'un dispositif selon l'une quelconque des revendications 1 à 7 dans le cas d'un boîtier comme élément inerte (1) d'un projectile (10) ou d'une munition.
